Europäisches Patentamt

European Patent Office

Office européen des brevets

(11) Veröffentlichungsnummer: **0 288 736**
**A2**

(12) **EUROPÄISCHE PATENTANMELDUNG**

(21) Anmeldenummer: 88104620.5

(22) Anmeldetag: 23.03.88

(51) Int. Cl.⁴: **F16F 9/46 , B60G 17/08 , F16F 9/34**

(30) Priorität: 01.04.87 DE 3710972
14.01.88 DE 3800865

(43) Veröffentlichungstag der Anmeldung:
02.11.88 Patentblatt 88/44

(84) Benannte Vertragsstaaten:
AT DE FR GB IT NL SE

(71) Anmelder: **ROBERT BOSCH GMBH**
**Postfach 50**
**D-7000 Stuttgart 1(DE)**

(72) Erfinder: **Engelsdorf, Kurt, Dr. Ing.**
**Schulstrasse 1/1**
**D-7122 Besigheim 3(DE)**
Erfinder: **Hägele, Karl-Heinz,Dipl.Phys. Dr.**
**Gerokstrasse 70**
**D-7143 Vaihingen/Enz(DE)**
Erfinder: **Taubitz, Bernd**
**Hermann-Essig-Strasse 106**
**D-7141 Schwieberdingen(DE)**
Erfinder: **Tran, Quang Ngoc, Dr. Ing.**
**Stossäckerstrasse 60**
**D-7000 Stuttgart 80(DE)**
Erfinder: **Zieher, Peter, Ing.**
**Buchbergstrasse 22**
**D-7147 Eberdingen(DE)**

(54) **Stossdämpfer I.**

(57) Vorgeschlagen wird ein Stoßdämpfer mit einem Kolben (5), innerhalb dessen die gesamte Menge des zwischen zwei Arbeitsräumen (11, 12) ausgetauschten Dämpfungsfluids über einen Drosselquerschnitt (50) strömt, dessen Größe von einer in erster Linie aus einer Magnetspule (17) und einem Anker (25) bestehenden elektromagnetischen Stelleinrichtung festgelegt wird. Der Anker (25) ist ringförmig und geht in einen mit einer Schiebersteuerkante (48) versehenen, ringförmigen Steuerschieber (33) über, welcher im Zusammenwirken mit einer Kolbensteuerkante (49) am Kolben (5) die Größe des Drosselquerschnitts (50) bestimmt. Steuerschieber (33) mit Anker (25) sind statisch druckausgeglichen und weisen aufgrund ihrer ringförmigen Gestaltung ein nur geringes Eigengewicht auf, so daß der beschriebene Stoßdämpfer mit kurzen Stellzeiten arbeitet. Durch eine gezielte Profilierung der Schiebersteuerkante (48) oder der Kolbensteuerkante (49) lassen sich bestimmte Dämpfungscharakteristiken verwirklichen.

Der Stoßdämpfer ist zur Anwendung in Kraftfahrzeugen bestimmt.

FIG. 1

## Stoßdämpfer I

### Stand der Technik

Die Erfindung geht aus von einem Stoßdämpfer nach der Gattung der Ansprüche 1 und 20. Es ist bereits ein Stoßdämpfer bekannt, dessen Dämpfung mittels einer elektromagnetischen Stellvorrichtung veränderbar ist. Die Stellvorrichtung ist am Dämpferkolben angeordnet. Sie umfaßt eine Magnetspule, einen Anker und einen mit dem Anker verbundenen Steuerschieber, dessen Lage die Androsselung des zwischen den Arbeitsräumen sich austauschenden Dämpfungsfluid bestimmt.

Bei der bekannten Lösung muß ein Kompromiß zwischen maximal möglichem Drosselquerschnitt und der Feinsteuerbarkeit im Bereich kleiner Drosselquerschnitte eingegangen werden.

Für die Steuerkante steht nicht der gesamte Umfang des Steuerschiebers zur Verfügung und die Androsselung des Dämpfungsfluids geschieht an zwei hintereinander geschalteten verstellbaren Drosselstellen. Beides bedingt einen relativ großen Schieber und damit einen relativ großen, massereichen Kolben. Die zwei hintereinander geschalteten Drosselstellen lassen sich nur gemeinsam, durch Verstellung des einen Steuerschiebers, verändern.

### Vorteile der Erfindung

Demgegenüber weist der mit den kennzeichnenden Merkmalen der Ansprüche 1 und 20 ausgestattete Stoßdämpfer den Vorteil kleiner Baugröße und hoher Stellgeschwindigkeit auf. Die einstellbaren Dämpfungswerte sind sehr weit gespannt.

Durch die in den zu dem Anspruch 1 abhängigen Ansprüchen aufgeführten Maßnahmen sind vorteilhafte Weiterbildungen und Verbesserungen des Stoßdämpfers möglich. Vorteilhaft ist es insbesondere, den Steuerschieber oder ein mit dem Steuerschieber zusammenwirkendes Bauteil des Kolbens mit einem bestimmten Steuerprofil zu versehen.

Das Steuerprofil kann zwischen weiten Grenzen nahezu beliebig ausgebildet werden. Dadurch ist es möglich, so gut wie jede gewünschte Schieberhub-Dämpferkraft-Charakteristik zu verwirklichen. Insbesondere läßt sich dadurch eine meist besonders vorteilhafte lineare Abhängigkeit der Dämpferkraft vom Hub des Schiebers erzielen.

Einerseits ist durch das Steuerprofil am Steuerschieber und/oder am Kolben ein sehr feinfühliges Steuern der Dämpfungskraft möglich, andererseits kann aber auch ein sehr großer Drosselquerschnitt bei relativ kleinen Bauteilabmessungen eingestellt werden.

Durch die aufgeführten Maßnahmen werden die von der durchströmenden Dämpfungsflüssigkeit herrührenden Kräfte auf ein Minimum reduziert.

Wegen der geringen Masse des Schiebers, dem geringen Hub und den geringen Kräften erhält man eine hohe Stellgeschwindigkeit bzw. es sind nur kleine und kostengünstige Stellmagnete erforderlich.

Eine besonders leicht herstellbare Variante des Stoßdämpfers erreicht man durch Einfügung einer Schraubenfeder als Drosselorgan anstelle des Steuerschiebers gemäß dem unabhängigen Anspruch 20.

Durch den in den Ansprüchen 23 und 24 aufgeführten Geber wird, zusammen mit einer elektronischen Steuereinheit sichergestellt, daß der Drosselquerschnitt seinen vorgesehenen Wert erreicht, unabhängig z.B. von eventuellen Reibungskräften zwischen Anker und Kolbenstange, Strömungskräften, elektrischen und magnetischen Verlusten.

### Zeichnung

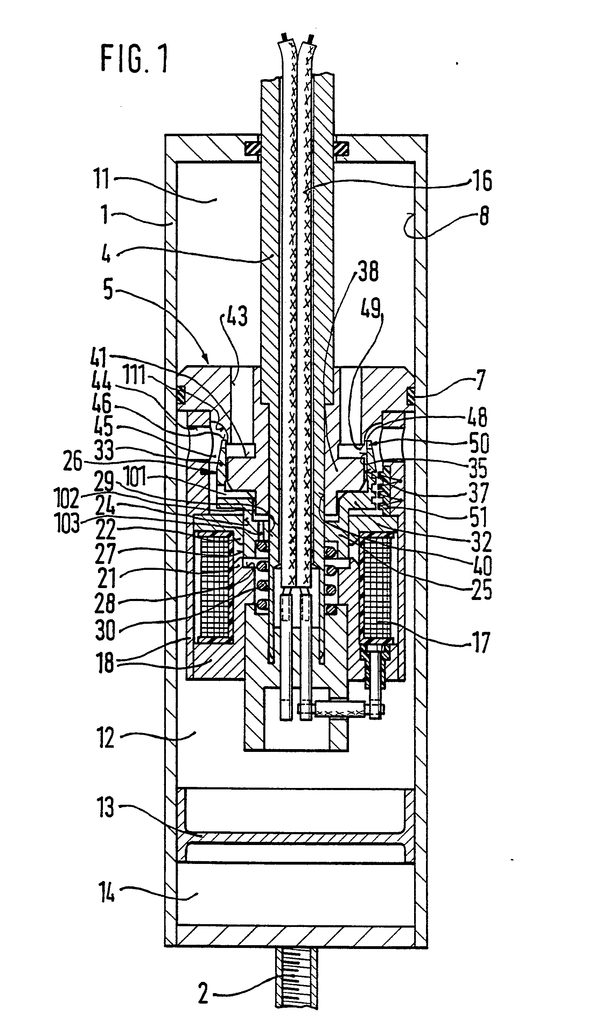

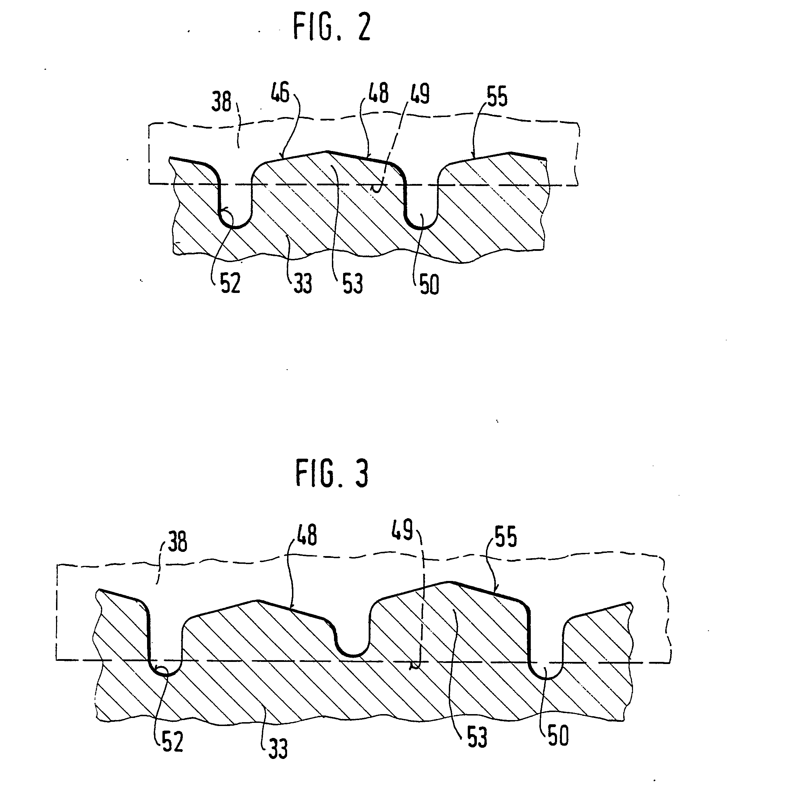

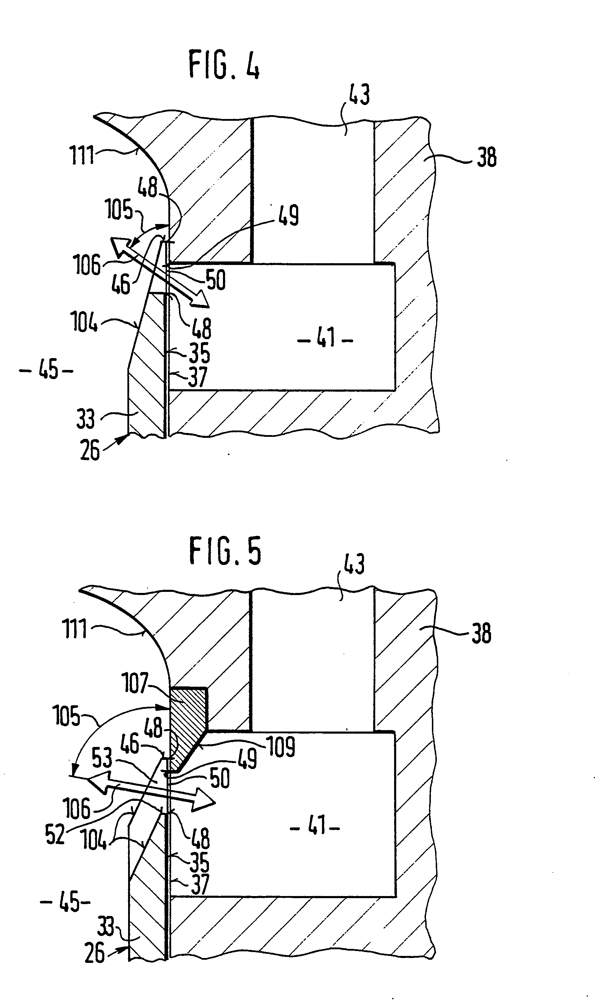

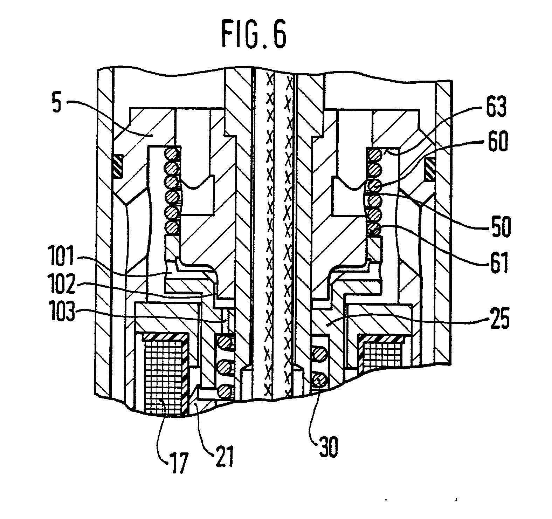

Ausführungsbeispiele der Erfindung sind in der Zeichnung vereinfacht dargestellt und im folgenden näher erläutert. Die Figur 1 zeigt ein erstes Ausführungsbeispiel eines Stoßdämpfers, Figur 2 und Figur 3 zeigen je eine Abwicklung der Steuerkante des Steuerschiebers aus Figur 1, Figur 4 einen Ausschnitt aus Figur 1, Figur 5 den gleichen Ausschnitt wie Figur 4 mit etwas abgewandelten Steuerkanten und Figur 6 ein zweites Ausführungsbeispiel eines Stoßdämpfers.

### Beschreibung der Ausführungsbeispiele

Der in Figur 1 dargestellte Stoßdämpfer verfügt über ein zylindrisches Mantelrohr 1, welches mit seiner einen Stirnseite an einer Fahrzeugachse 2 befestigt ist. Aus der anderen Stirnseite des Mantelrohrs 1 ragt eine Kolbenstange 4 heraus, welche an einem nicht dargestellten Fahrzeugaufbau angreift. Die Kolbenstange 4 ist an ihrem anderen Ende mit einem zylindrischen Kolben 5 verbunden, welcher unter Zwischenlage einer Dichtung 7 an einer inneren Mantelfläche 8 des Mantelrohres 1 axial gleiten kann.

Der Innenraum des Mantelrohres 1 wird durch den Kolben 5 in einen ersten Arbeitsraum 11 und einen zweiten Arbeitsraum 12 unterteilt.

Innerhalb des Mantelrohres 1 ist durch eine bewegliche Trennwand 13 außerdem ein gasgefüllter Ausgleichsraum 14 abgetrennt, welcher zur Kompensation der Volumenzu-bzw. -abnahme in den Arbeitsräumen 11 und 12 durch das einfahrende bzw. ausfahrende Eigenvolumen der Kolbenstange 4 dient.

Die Kolbenstange 4 ist hohl und nimmt eine elektrische Zuleitung 16 auf, welche an eine koaxial innerhalb des Kolbens befindliche Magnetspule 17 angeschlossen ist. Die Magnetspule 17 befindet sich innerhalb eines einen Teil des Kolbens 5 bildenden Spulengehäuses 18, welches an der Innenseite der Magnetspule 17 in einem ringförmigen ersten Pol 21 ausläuft. Ein zweiter, ebenfalls ringförmiger Pol 22, welcher mit dem Spulengehäuse 18 verbunden ist, erstreckt sich unter Wahrung eines gewissen Abstandes axial in Richtung auf den ersten Pol 21. Beide Pole 21, 22 sind mit einer koaxialen Bohrung 24 versehen, in welche ein als Anker 25 wirkender Teilbereich eines hülsenförmigen Schiebers 26 zumindest teilweise hineinragt. Je nach der axialen Stellung des Ankers 25 in der Bohrung 24 überdeckt der Anker 25 in axialer Richtung nicht nur den zweiten Pol 22, sondern auch den ersten Pol 21. Die für die Magnetkraft auf den Anker 25 maßgebenden Magnetluftspalte befinden sich zwischen einem zylindrischen Außenmantel 27 des Ankers 25 und der die radialen Polflächen der Pole 21, 22 bildenden Bohrung 24 sowie zwischen einem sacklochartig zurückversetzten axialen Absatz 28 des ersten Pols 21 und einer dem Absatz 28 zugewandten Stirnfläche des Ankers 25.

Im Schieber 26 ist eine axiale Durchgangsbohrung 29, mittels derer der Schieber 26 auf der Kolbenstange 4 axial gleitend verschiebbar ist. Mittels einer die Kolbenstange 4 umgebenden Druckfeder 30 wird der Schieber 26 mit einer Kraft beaufschlagt, die bestrebt ist, den Schieber 26 vom ersten Pol 21 weg zu bewegen. Dementsprechend wird der Anker 25 und damit der Schieber 26 bei elektrischer Erregung der Magnetspule 17 entgegen der Kraft der Druckfeder 30 in Richtung auf eine stärkere Überdeckung zwischen dem zylindrischen Außenmantel 27 des Ankers 25 und dem ersten Pol 21 bewegt.

Der Druckfeder 30 abgewandt geht der Anker 25 über eine Erweiterung in Form einer Ringscheibe 32 in einen hülsenförmigen Steuerschieber 33 über, wobei der Durchmesser des Steuerschiebers 33 größer ist als der Durchmesser des Ankers 25. Der Steuerschieber 33 kann entweder, wie in Figur 1 dargestellt, zusammen mit dem Anker 25 Bestandteil eines Bauteils, dem Schieber 26, sein oder aus zwei zusammengefügten Bauteilen bestehen.

Der hülsenförmige Steuerschieber 33 kann mit einer feinbearbeiteten inneren Mantelfläche 35 auf einer ebenfalls feinbearbeiteten äußeren Mantelfläche 37 eines einen Teil des Kolbens 5 bildenden Zylinders 38 gleiten. Der Zylinder 38 ist mit einer Zentralbohrung 40 versehen, durch welche die Kolbenstange 4 ragt. Kolbenstange 4 und Zylinder 38 sind fest miteinander verbunden.

In der äußeren Mantelfläche 37 des Zylinders 38 ist eine umlaufende Ringnut 41 eingearbeitet. Eine oder mehrere axial außermittig verlaufende Aussparungen 43 stellen eine Strömungsverbindung zwischen der Ringnut 41 und dem ersten Arbeitsraum 11 her. Radial um die Ringnut 41 herum und außerhalb des Steuerschiebers 33 ist im Spulengehäuse 18 mindestens eine Strömungsöffnung 44 eingearbeitet, welche eine Strömungsverbindung zwischen einem den Schieber 26 aufnehmenden Steuerraum 45 und dem zweiten Arbeitsraum 12 herstellt.

Die Länge des Schiebers 26 ist so bemessen daß, je nach axialer Stellung des Schiebers 26, der Steuerschieber 33 die Ringnut 41 in axialer Richtung mehr oder weniger überdeckt. Am Steuerschieber 33 befindet sich, der Magnetspule 17 abgewandt, eine Stirnseite 46. Die Kante zwischen der inneren Mantelfläche 35 und der Stirnseite 46 des Schiebers 26 ist als Schiebersteuerkante 48 ausgebildet, welche im Zusammenwirken mit einer die Ringnut 41 begrenzenden Kolbensteuerkante 49 die Größe eines Drosselquerschnittes 50 bestimmt, über den das gesamte zwischen den Arbeitsräumen 11 und 12 ausgetauschte Dämpfungsfluid strömt. Die Kolbensteuerkante 49 ist eine relativ zum Kolben feststehende Kante. Das Dämpfungsfluid wird nur einmal angedrosselt.

Am Spulengehäuse 18 ist in der Nähe des Schiebers 26 ein Geber 51 befestigt, welcher der Erfassung der Stellung des Schiebers 26 relativ zum Kolben 5 dient. Der Geber 51, welcher beispielsweise induktiv oder kapazitiv mißt, gibt ein Meßsignal an eine elektronische Steuereinheit, welche über einen Soll-Ist-Vergleichsoperator ein Stellsignal erzeugt, das der Magnetspule 17 zugeführt wird. Damit wird ein Regelkreis gebildet und der Schieber 26 läßt sich wesentlich genauer und von Toleranzen unabhängiger positionieren als ohne Rückmeldung der Ist-Stellung des Schiebers 26.

Die Schiebersteuerkante 48 und/oder die Kolbensteuerkante 49 können mit einem Profil mit in axialer Richtung sich erstreckenden Erhebungen und Vertiefungen versehen werden.

Figur 2 zeigt als Beispiel einen möglichen Verlauf der Schiebersteuerkante 48 und der Kolbensteuerkante 49 bei einem Stoßdämpfer entsprechend Figur 1. In dieser Figur und in allen nachfolgenden Figuren sind gleiche Teile mit den gleichen Bezugzeichen versehen wie in Figur 1. Während die die Ringnut 41 begrenzende Kolbensteuerkante 49 gerade verläuft, ist das Profil der Schiebersteuerkante 48 des Steuerschiebers 33 ein Zahnprofil, bei dem die Vertiefungen wie Zahnlücken 52 und die Erhebungen wie Zähne 53 ausgebildet sind.

Je mehr der Schieber 26 bei Erregung der Magnetspule 17 angezogen wird, desto weiter lenkt der Steuerschieber 33 aus und um so mehr öffnet sich der Drosselquerschnitt 50.

Bei relativ geringer Auslenkung des Steuerschiebers 33 wird der Drosselquerschnitt 50 nur durch die Zahnlücken 52 gebildet, während die Zähne 53 die Kolbensteuerkante 49 des Zylinders 38 noch größtenteils bedeckt halten. Bei relativ weiter Auslenkung des Steuerschiebers 33 hebt die Schiebersteuerkante 48 auch im Bereich der Zähne 53 von der Kolbensteuerkante 49 ab. Der Drosselquerschnitt 50 erstreckt sich damit ohne Unterbrechung über den gesamten Umfang des Zylinders 38. Auf die Dämpfungskraft des Stoßdämpfers übertragen ist die Dämpfung relativ stark, wenn die Drosselquerschnitte 50 nur durch die Zahnlücken 52 gebildet sind und nimmt bei zunehmender Erregung der Magnetspule ab. Das Profil der Schiebersteuerkante 48 und der Kolbensteuerkante 49 kann so gestaltet werden, daß sich eine in weiten Grenzen bestimmbare Abhängigkeit der Dämpfungskraft vom Hub des Schiebers 26 ergibt.

Bei dem in Figur 2 dargestellten Ausführungsbeispiel ist der Schieber 26 so ausgelegt, daß bei normaler Arbeitsstellung gerade ein Teilbereich von abgeschrägt verlaufenden Flanken 55 der Zähne 53 in Überdeckung mit dem Zylinder 38 steht. Innerhalb dieser normalen Arbeitsstellung besteht eine stufenlose, lineare Abhängigkeit der Dämpfungskraft vom Hub des Schiebers 26.

Der Steuerschieber 33 ist so gestaltet, daß bei nicht ausgelenktem Steuerschieber 33 die Zahnlücken 52 mehr oder weniger offen bleiben.

Bei einem Ausfall der elektrischen Ansteuerung der Magnetspule 17 arbeitet der Stoßdämpfer mit der maximal möglichen Dämpfung.

Figur 3 zeigt wie Figur 2 einen möglichen Verlauf der Schiebersteuerkante 48. In Figur 3 ist jedoch die axiale Ausdehnung der Erhebungen und der Vertiefungen unterschiedlich dargestellt. Auch hier sind die Erhebenungen wie Zähne 53 und die Vertiefungen wie Zahnlücken 52 ausgebildet. Durch die unterschiedliche axiale Tiefe der Zahnlücken 52 ergibt sich eine weitere Verbesserung der Konstruktion und eine Erhöhung der Betriebssicherheit. Denn dadurch sind bei nicht ausgelenktem oder wenig ausgelenktem Steuerschieber 33, d.h. bei starker Dämpfung einige der Zahnlücken 52 vom Zylinder 38 abgedeckt. Damit können die nicht abgedeckten Zahnlücken 52, bei gleicher Dämpfungskraft, breiter ausgeführt sein. Das ergibt geringeren Einfluß von Toleranzen und geringere Schmutzempfindlichkeit. Mit zunehmender Auslenkung des Steuerschiebers 33, d.h. mit zunehmendem Drosselquerschnitt 50 ist es hingegen günstig, wenn der Drosselquerschnitt 50 von einer nicht zu geringen Anzahl von Zahnlücken 52 gebildet wird, weil dadurch an einzelnen Zahnlücken 52 eventuell unterschiedlich große radiale Komponenten von Strömungskräften gegenseitig besser kompensiert werden.

Durch die im folgenden beispielhaft erläuterte Gestaltung des Schiebers 26, des Steuerraumes 45 und der Kolbensteuerkante 49 ergeben sich besonders kleine axiale Strömungskräfte am Schieber 26. Der Druck im Steuerraum 45 kann über eine radiale Entlastungsverbindung 101, eine erste axiale Entlastungsverbindung 102 und eine zweite axiale Entlastungsverbindung 103 allseits auf den Schieber 26 wirken. Hier sind auch andere Entlastungsverbindungen denkbar, aber nicht erfindungswesentlich. Der Schieber 26 ist somit im statischen Fall druckausgeglichen. Wenn jedoch Fluid vom Steuerraum 45 in die Ringnut 41 oder umgekehrt von der Ringnut 41 in den Steuerraum 45 strömt, dann hat es im Bereich der Schiebersteuerkante 48 seine höchste Strömungsgeschwindigkeit und folglich ist dort der Staudruck (Geschwindigkeitsdruck; dynamischer Druck) am größten. Wegen der Bedingung, daß, unter Vernachlässigung von Verlusten, die Summe aus statischem Druck und Staudruck konstant ist, ist im Bereich der Schiebersteuerkante 48 und damit auf die Stirnfläche 46 der statische Druck geringer als im übrigen Bereich des Schiebers 26. Daraus resultiert eine axiale Kraft auf den Schieber 26 in schließender Richtung. Diese Kraft fällt um so geringer aus, je schmaler die Stirnseite 46 des Steuerschiebers 33 ausgebildet ist.

Figur 4 zeigt einen Ausschnitt aus Figur 1 mit der Ringnut 41 und einem Ende des Schiebers 26, an dem sich der Steuerschieber 33 mit Schiebersteuerkante 48 befindet.

Figur 5 zeigt den gleichen Ausschnitt aus Figur 1 wie Figur 4, aber in etwas abgewandelter Ausführung.

In den Beispielen nach den Figuren 4 und 5 ist am Steuerschieber 33 eine Schräge 104 so angebracht, daß sich der Steuerschieber 33 auf dem der Schiebersteuerkante 48 zugewandten Ende schneidenartig verjüngt. Dadurch ergibt sich eine sehr schmale Stirnseite 46. Aus Festigkeitsgründen ist es günstig, wenn, wie dargestellt, eine minimale Breite an der Stirnseite 46 gelassen wird.

In Figur 4 bildet die Schräge 104 einem umlaufenden Kegel. In Figur 5 ist die Schräge 104 so ausgebildet, daß die Stirnseite 46 in der Zahnlücke 52 etwa gleich schmal ist wie am Zahn 53.

Neben der zuerst beschriebenen Kraft gibt es weitere, welche nun ebenfalls anhand der Ausführungsbeispiele nach Figur 4 und 5 erläutert werden sollen.

In Figur 4 und 5 wird mit 105 der Winkel zwischen der Strömungsrichtung 106 des Fluids durch den Drosselquerschnitt 50 und der Betätigungsrichtung des Schiebers 26 bezeichnet.

Ist der Winkel 105 kleiner als 90°, dann wirkt eine weitere axiale Kraft auf den Schieber 26. Je näher der Winkel 105 bei 90° ist, desto kleiner ist diese axiale Kraft. Dieser Winkel 105 wird bekanntlich bestimmt vom radialen Spiel zwischen der inneren Mantelfläche 35 des Steuerschiebers 33 und der äußeren Mantelfläche 37 des Zylinders 38, von der Form der Schiebersteuerkante 48 und der Kolbensteuerkante 49 und vom axialen Abstand der beiden Steuerkanten, ferner aber auch von der Gestalt des Raumes aus dem das Fluid in den Drosselquerschnitt 50 einströmt bzw. in das es abströmt. Im Ausführungsbeispiel nach Figur 4 sind diese Räume so gestaltet, daß der Winkel 105 relativ nahe bei 90° liegt. Dies wird erstens erreicht durch die bereits oben beschriebene Schräge 104 am Steuerschieber 33 und zweitens durch möglichst großen axialen Abstand zwischen der Schiebersteuerkante 48 und der Kolbensteuerkante 49. Auch bei stärker eingestellter Dämpfung ergibt sich dieser möglichst große axiale Abstand durch die bereits weiter oben beschriebene und in jenem Zusammenhang sich auch positiv auswirkende Profilierung der Schiebersteuerkante 48 und/oder der Kolbensteuerkante 49 deshalb, weil durch die Profilierung ein Teil der Steuerkanten überdeckt sind, so daß für den Drosselquerschnitt nur einzelne Lücken verbleiben.

Im Ausführungsbeispiel nach Figur 5 ergibt sich eine weitere Verringerung der auf den Schieber 26 einwirkenden Kräfte. Durch schneidenartige Ausgestaltung eines die Kolbensteuerstange 49 bildenden Eckteils 107 der Ringnut 41, was durch Anbringen einer Schräge 109 erreicht wird, wird der Anströmwinkel 105 noch etwas in Richtung 90° verbessert.

Das Eckteil 107 und der Zylinder 38 können, wie in Figur 5 dargestellt, aus verschiedenen oder, wie nicht dargestellt, aus einem Teil bestehen.

Die dargestellte Verminderung der axialen Kräfte auf den Schieber 26 wird noch dadurch verbessert, daß, wegen der Profile an der Schiebersteuerkante 48 und/oder an der Kolbensteuerkante 49, bei stärkerer Dämpfung, diese Kräfte nur in Teilbereichen des Steuerschieberumfangs auf diesen wirken.

Die oben beschriebenen Kräfte wirken alle in die den Drosselquerschnitt verkleinernde Richtung.

Diese Kräfte können mindestens teilweise durch eine Kraft kompensiert werden, welche durch ein günstige und nachfolgend näher erläuterte Gestaltung des Steuerraumes 45 entsteht.

Der Steuerraum 45 wird gegenüberliegend der Stirnseite 46 des Schiebers 26 durch eine Umlenkung 111 begrenzt. Diese Umlenkung 111 kann beispielsweise als Rundung ausgebildet sein. Durch diese Umlenkung 111 wird das radial aus der mindestens einen Strömungsöffnung 44 in den Steuerraum 45 strömende Fluid zumindest teilweise in axiale Richtung umgelenkt. Dies bewirkt eine Anströmung des Fluids auf die Stirnseite 46 des Schiebers 26. Daraus ergibt sich eine Kraft mit dem Bestreben den Drosselquerschnitt 50 zu öffnen. Die Richtung dieser Kraft ist den oben beschriebenen Kräften entgegengesetzt, wodurch jene mindestens teilweise kompensiert werden.

Der Schieber 26 ist rotationssymetrisch. Dadurch werden die in radialer Richtung wirkenden Komponenten der auf den Schieber 26 wirkenden Kräfte innerhalb des Schiebers kompensiert.

Bei dem in Figur 6 dargestellten weiteren Ausführungsbeispiel eines Stoßdämpfers ist der Steuerschieber 33 des ersten Ausführungsbeispieles durch eine Schraubenfeder 60 ersetzt, welche einerseits an einer Stirnfläche 61 des Ankers 25 anliegt und andererseits an einem Absatz 63 des Kolbens 5. Bei nicht erregter Magnetspule 17 wird durch die auf den Anker 25 einwirkende Kraft der Druckfeder 30 die Schraubenfeder 60 so weit zusammengepreßt, daß ihre Windungen fast aneinander liegen. In diesem Fall besteht eine nur kleine Strömungsverbindung zwischen den Arbeitsräumen 11 und 12. Eine Erregung der Magnetspule 17 führt zu einer Überwindung der Druckkraft der Druckfeder 30, wodurch der Anker 25 zum ersten Pol 21 gezogen wird und sich die Schraubenfeder 60 entspannt. Die jeweils benachbarten Windungen der Schraubenfeder 60 heben weiter voneinander ab und geben zwischen sich die Drosselquerschnitte 50 für das Dämpfungsfluid frei. Je mehr die Schraubenfeder 60 entspannt wird, desto größer werden die Drosselquerschnitte 50.

Bei den Ausführungsbeispielen ist es ein besonderer Vorteil, wenn der Steuerschieber 33 bzw. die Schraubenfeder 60 einen möglichst großen Durchmesser aufweist, da schon bei geringem Ankerhub große Drosselquerschnitte 50 zu realisieren sind. Der Durchmesser von Steuerschieber 33 bzw. Schraubenfeder 60 sollte zweckmäßigerweise deutlich größer sein als der Durchmesser der Kolbenstange 4.

## Ansprüche

1. Stoßdämpfer, insbesondere für Fahrzeuge, mit einem innerhalb eines Mantelrohres in einem Zylinder geführten und an einer Kolbenstange befestigten Kolben, der im Zylinder zwei mit einem Dämpfungsfluid gefüllte Arbeitsräume voneinander trennt, sowie mit mindestens einer Strömungsverbindung zwischen den Arbeitsräumen, über welche mindestens eine Teilmenge des zwischen den Arbeitsräumen sich austauschenden Dämpfungsfluids strömt und mit einer elektromagnetischen, eine Magnetspule und einen Anker aufweisenden Stelleinrichtung, die in den Kolben integriert ist, ferner mit einem mit dem Anker verbundenen Steuerschieber, der eine Schiebersteuerkante hat, deren jeweilige Lage die Androsselung des Dämpfungsfluids innerhalb der mindestens einen Strömungsverbindung bestimmt, dadurch gekennzeichnet, daß die zwischen den Arbeitsräumen sich austauschende Teilmenge des Dämpfungsfluids in der jeweiligen Fließrichtung nur einmal angedrosselbar ist durch einen mindestens von der Schiebersteuerkante und einer in bezug zum Kolben (5) feststehenden Kante (49) gebildeten Drosselquerschnitt.

2. Stoßdämpfer nach Anspruch 1, dadurch gekennzeichnet, daß die Schiebersteuerkante (48) ein Profil aufweist mit mindestens einer, sich in Betätigungsrichtung des Steuerschiebers erstreckender Erhebung und Vertiefung.

3. Stoßdämpfer nach Anspruch 1 oder 2, dadurch gekennzeichnet, daß die zum Kolben (5) feststehende Kante (49) ein Profil aufweist mit mindestens einer, sich in Betätigungsrichtung des Steuerschiebers erstreckender Erhebung und Vertiefung.

4. Stoßdämpfer nach Anspruch 2 oder 3, dadurch gekennzeichnet, daß die Ausdehnung einzelner Erhebungen in Betätigungsrichtung des Steuerschiebers unterschiedlich ist.

5. Stoßdämpfer nach Anspruch 2 oder 3, dadurch gekennzeichnet, daß die Ausdehnung einzelner Vertiefungen in Betätigungsrichtung des Steuerschiebers unterschiedlich ist.

6. Stoßdämpfer nach mindestens einem der Ansprüche 2 bis 5, dadurch gekennzeichnet, daß mindestens eine Erhebung mindestens einer Kante die Form eines Zahnes (53) und mindestens eine Vertiefung die Form einer Zahnlücke (52) aufweisen.

7. Stoßdämpfer nach einem der Ansprüche 2 bis 6, dadurch gekennzeichnet, daß die den jeweiligen Drosselquerschnitt bestimmenden Kanten so ausgebildet sind, daß die Dämpferkraft linear mit dem Hub des Steuerschiebers (33), mindestens in einem Teilbereich des Hubs, veränderbar ist.

8. Stoßdämpfer nach mindestens einem der Ansprüche 1 bis 7, dadurch gekennzeichnet, daß die den Drosselquerschnitt bestimmende Schiebersteuerkante (48) bei mindestens einem Teil der möglichen Stellungen des Steuerschiebers ohne Unterbrechung umläuft.

9. Stoßdämpfer nach mindestens einem der Ansprüche 1 bis 8, dadurch gekennzeichnet, daß die den Drosselquerschnitt bestimmende relativ zum Kolben feststehende Kante (49) bei mindestens einem Teil der möglichen Stellungen des Steuerschiebers ohne Unterbrechung umläuft.

10. Stoßdämpfer nach mindestens einem der Ansprüche 1 bis 9, dadurch gekennzeichnet, daß der Drosselquerschnitt bei mindestens einem Teil der möglichen Stellungen des Steuerschiebers durch eine zusammenhängende nicht unterbrochene Drosselquerschnittsfläche gebildet wird.

11. Stoßdämpfer nach mindestens einem der Ansprüche 2 bis 10, dadurch gekennzeichnet, daß sich der Drosselquerschnitt bei mindestens einem Teil der möglichen Stellungen des Steuerschiebers aus mehreren Einzel-Drosselquerschnittsflächen zusammensetzt.

12. Stoßdämpfer nach einem der Ansprüche 1 bis 11, dadurch gekennzeichnet, daß der Steuerschieber (33) an einer die Schiebersteuerkante (48) bildenden Stirnseite (46) in radialer Richtung - schmal ausgebildet ist.

13. Stoßdämpfer nach Anspruch 12, dadurch gekennzeichnet, daß sich der Steuerschieber (33) auf dem der Schiebersteuerkante (48) zugewandten Ende schneidenartig verjüngt.

14. Stoßdämpfer nach einem der Ansprüche 1 bis 13, dadurch gekennzeichnet, daß ein Ringnut-Eckteil (107) sich in Richtung der Kante (49) - schneidenartig verjüngt.

15. Stoßdämpfer nach einem der Ansprüche 1 bis 14, dadurch gekennzeichnet, daß in einem Steuerraum (45), gegenüber der Stirnseite (46) des Steuerschiebers (33) eine Umlenkung (108) vorgesehen ist.

16. Stoßdämpfer nach einem der Ansprüche 1 bis 15, dadurch gekennzeichnet, daß die gesamte Menge des zwischen den Arbeitsräumen sich austauschenden Dämpfungsfluids über die mindestens eine Strömungsverbindung strömt.

17. Stoßdämpfer nach einem der Ansprüche 1 bis 16, dadurch gekennzeichnet, daß der Durchmesser der Schiebersteuerkante (48) und der Kante (49) deutlich größer ist als der Durchmesser der Kolbenstange (4).

18. Stoßdämpfer nach mindestens einem der Ansprüche 1 bis 17, dadurch gekennzeichnet, daß die Stelleinrichtung koaxial zur Stoßdämpferachse wirksam ist.

19. Stoßdämpfer nach Anspruch 18, dadurch gekennzeichnet, daß der Anker (25) auf die Kolbenstange (4) gleitbeweglich aufgesetzt ist.

20. Stoßdämpfer, insbesondere für Fahrzeuge, mit einem innerhalb eines Mantelrohres in einem Zylinder geführten und an einer Kolbenstange befestigten Kolben, der im Zylinder zwei mit einem Dämpfungsfluid gefüllte Arbeitsräume voneinander trennt, ferner mit mindestens einer Strömungsverbindung zwischen den Arbeitsräumen über welche mindestens eine Teilmenge des zwischen den Arbeitsräumen sich austauschenden Dämpfungsfluids strömt, sowie mit einer in den Kolben integrierten elektromagnetischen Stelleinrichtung und mit einem durch eine Magnetspule betätigten Anker, dessen Stellung die Größe eines Drosselquerschnittes innerhalb der Strömungsverbindung bestimmt, dadurch gekennzeichnet, daß zwischen dem Anker (25) und dem Kolben (5) eine Schraubenfeder (60) vorgesehen ist, die einerseits am Anker (25) und andererseits am Kolben (5) anliegt und zwischen deren einzelnen Federwindungen der Drosselquerschnitt gebildet wird.

21. Stoßdämpfer nach Anspruch 20, dadurch gekennzeichnet, daß die gesamte Menge des zwischen den Arbeitsräumen sich austauschende Dämpfungsfluid über die mindestens eine Strömungsverbindung strömt.

22. Stoßdämpfer nach Anspruch 20 oder 21, dadurch gekennzeichnet, daß der Durchmesser der Schraubenfeder (60) deutlich größer ist als der Durchmesser der Kolbenstange (4).

23. Stoßdämpfer nach einem der vorhergehenden Ansprüche, gekennzeichnet durch die Verwendung eines Gebers (51), welcher die Lage eines beweglichen, den Drosselquerschnitt (50) bestimmenden Bauteils relativ zum Kolben (5) erfaßt.

24. Stoßdämpfer nach Anspruch 23, dadurch gekennzeichnet, daß das den Drosselquerschnitt (50) bestimmende Bauteil der Anker (25) ist.

FIG. 1

0 288 736

21 147 IP I

## FIG. 2

## FIG. 3

FIG. 4

FIG. 5

FIG.6